# EUROPEAN PATENT APPLICATION

(11) **EP 0 854 241 A1**
(43) Date of publication of application: **22.07.1998**
(21) Application number: 97903596.1
(22) Date of filing: 21.02.1997
(51) Int. Cl.: E02F 9/10

(54) **WORKING MACHINE WITH TURNING BODY**

(30) Priority: 11.04.1996 JP 114187/96
(71) Applicant: Shin Caterpillar Mitsubishi Ltd., Tokyo 158 (JP)
(72) Inventor: YAMAGISHI, Yoshinori, Shin Caterpillar Mitsub. Ltd, Tokyo 158 (JP); NISHIKAWA, Akitoshi, Shin Caterpillar Mitsub. Ltd, Tokyo 158 (JP)
(74) Representative: Smith, Norman Ian
(86) International application number: JP9700490
(87) International publication number: WO9738175

(57) **Abstract**

An upper structure is provided with covers, freely swinging to open or close, to prevent the covers from hitting against an obstruction, so that the covers or obstruction is damaged even when the upper structure swings in the open condition and from going outside the locus S, which is traced by the upper structure 3 as it swings, when the covers are placed in the open position.

## Description

### Background of the Invention

The present invention relates to a work machine with an upper structure which is used for a wide range of construction work and civil engineering work, such as a hydraulic shovel.

### Technical Field

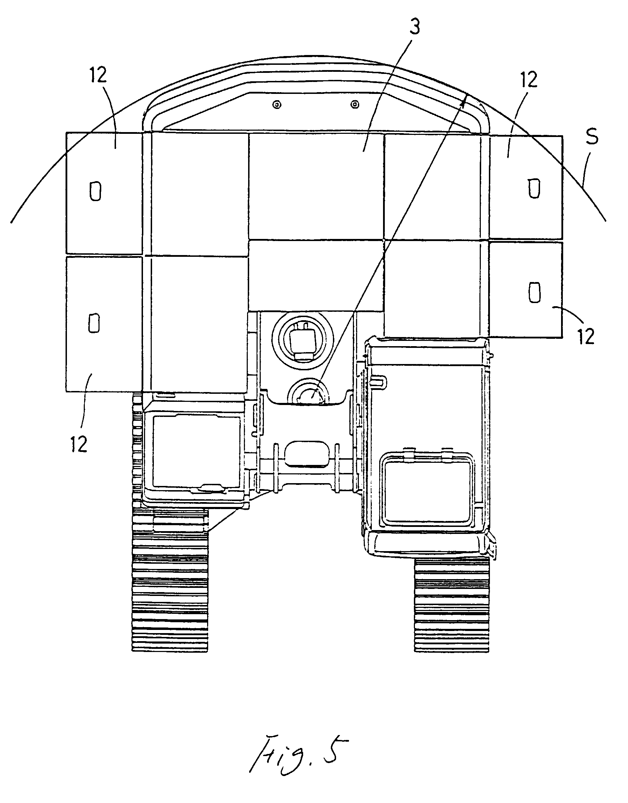

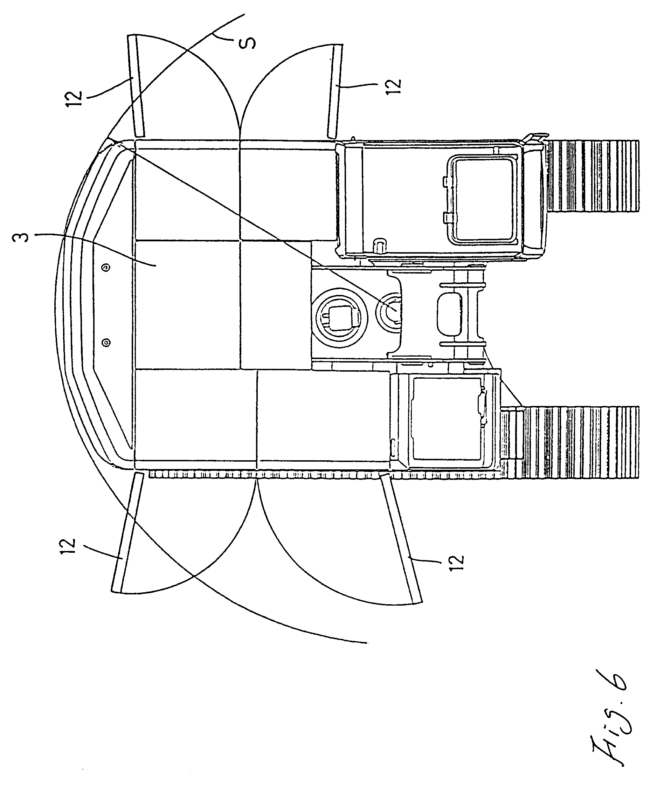

Generally, some work machines with an upper structure are provided with openings to inspect and service equipment installed in the upper structure, such as an engine and a pump, and with covers for opening or closing the openings so that the covers freely swing to open or close. When such openings are provided in the sides of the upper structure, conventional covers 12 are pivoted at their upper, right, or left edge to the upper structure 3 so that the covers freely swing to open or close, as shown in Figs. 5 and 6. In this case, the openings are required to be made as large as possible to facilitate inspection and maintenance, such as servicing, and a mechanism that keeps the covers in the open position is required to be installed to prevent the covers in the open position from being unexpectedly closed by the wind or the like. Thus once opened, the covers are adapted to be kept in the open position unless the operator intentionally closes them.

When a conventional cover is placed in the open position, on the other hand, the opening side edges of the cover 12 are positioned outside the locus S which is traced by the outermost shell of the upper structure 3 as it swings, as shown in Figs. 5 and 6. Thus when the swinging position of the upper structure is desired to be shifted, with the covers in the open position, during maintenance or if the upper structure swings, with the covers carelessly left open, after maintenance, the locus which is traced by the covers in the open position as they move is larger than that which is traced by the rotor as it rotates. Typically, the operator empirically understands the locus which is traced by the upper structure itself as it swings, but does not, that which is traced by a cover in the open position as it moves. In such a case, if there is an obstruction around the work machine, the cover hits against the obstruction, so that the cover or obstruction is damaged. This is a problem which the present invention is intended to solve.

### Disclosure of the Invention

According to the present invention, which has been made in view of the foregoing reality to solve these problems, a work machine comprising an upper structure rotatably supported over a base, wherein covers swingable to open or close are provided in the upper structure, said covers being set not to go outside the locus which is traced by said upper structure as it swings when the covers are in the open position.

A cover of the present invention, which is in a substantially inverted L shape to open or close openings extending from the top to one side of the upper structure and are pivoted at a proximal base end edge of the top of the covers with respect to the upper structure so that the cover freely swings up and down about the pivot edge.

When covers are arranged as the double-leafed hinged type to open or close openings formed in the sides of the upper structure the width of the covers which are disposed farther from the center of swinging of the upper structure is set to be narrower than that of the other covers which are disposed nearer the center of swinging.

### Brief Description of the Drawings

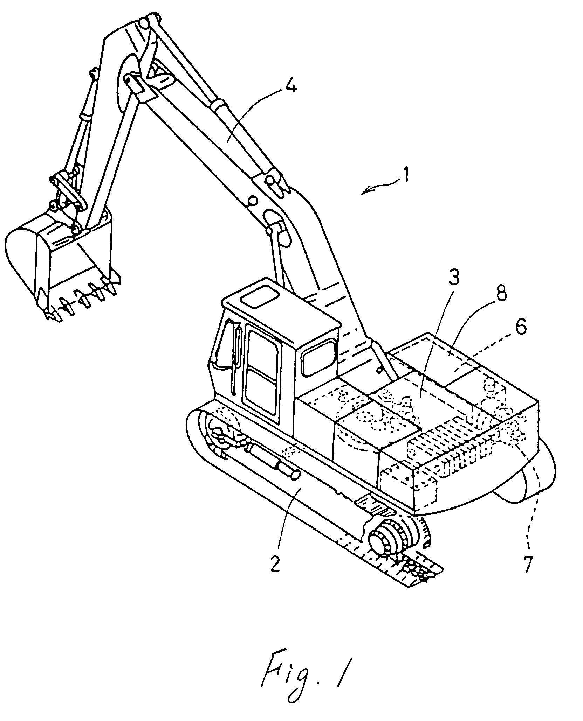

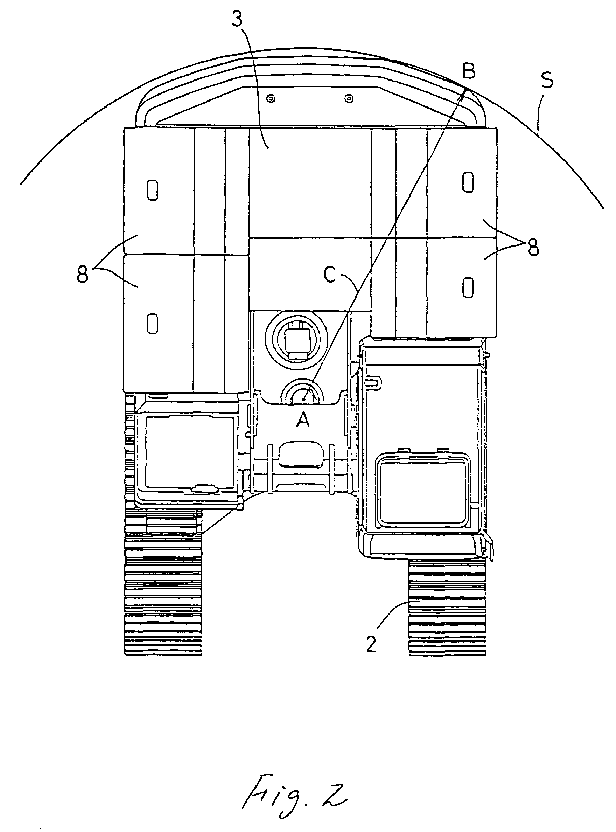

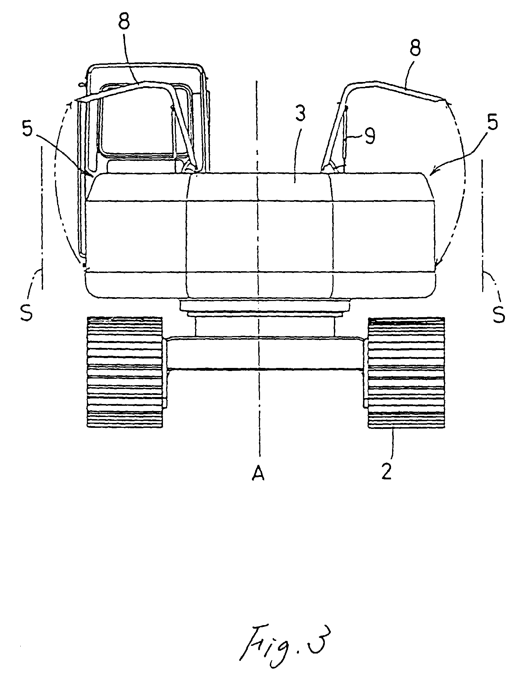

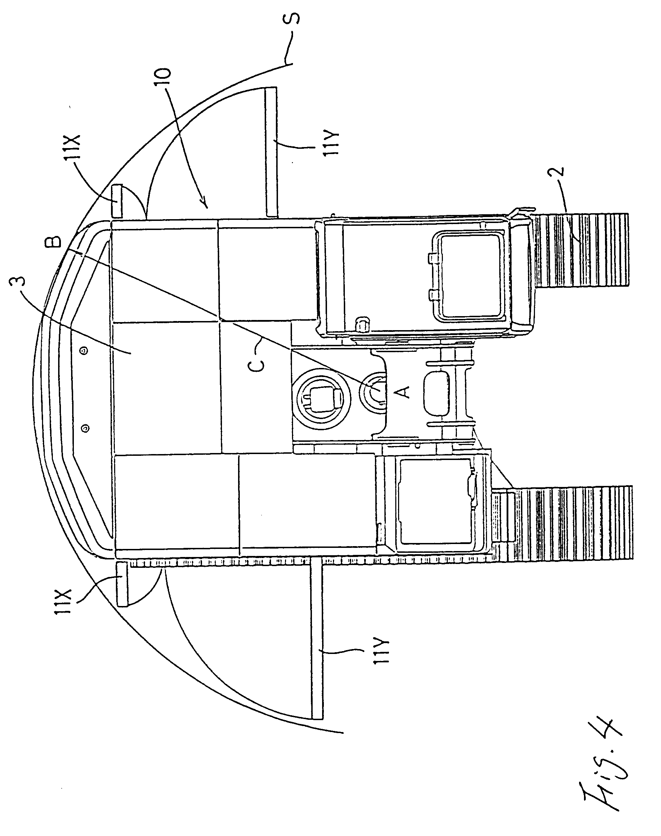

Fig. 1 is a perspective view of a hydraulic shovel; Fig. 2 is a plan view of the body of a hydraulic shovel, with its covers in the open position, showing a first embodiment; Fig. 3 is a rear view of the body of the hydraulic shovel, with its covers in the open position, showing the first embodiment; Fig. 4 is a plan view of the body of a hydraulic shovel, with its covers in the open position, showing a second embodiment; Fig. 5 is a plan view of the body of a conventional hydraulic shovel, with its covers in the open position, which are pivoted at their upper edge; and Fig. 6 is a plan view of the body of a conventional hydraulic shovel, with its covers in the open position, which are pivoted at their right or left edge.

### Best Modes for Carrying Out the Invention

Referring now to the drawings, embodiments of the present invention are described below.

A first embodiment of the present invention is show in Figs. 1 through 3, in which a numeral 1 indicates a hydraulic shovel, whose body consists of a crawler type lower structure 2 and an upper structure 3 rotatably supported over the lower structure 2 and the basic arrangement including a front attachment 4 installed in front of the upper structure 3 as is the case with a conventional hydraulic shovel.

A numeral 5 indicates an opening which is provided to inspect and service equipment installed in the upper structure 3 such as an engine 6 and a pump 7. The openings 5 are formed to extend from the left top to the left side of the upper structure 3, and from the right top to the right side thereof.

A numeral 8 indicates a gull-wing cover for opening or closing an opening 5. The cover 8 formed in a substantially inverted L shape to open or close the top and side of the opening, is pivoted at the proximal base end edge of the top thereof in the middle of the top of the upper structure 3 so that the cover freely swings up and down to open or close.

Then the locus S which is traced by the outermost shell as the upper structure 3 swings is an arc of radius C linking the center of swinging A of the upper structure 3 to part B which is the farthest from the center of swinging A (in the embodiment, part B is at the rear of the upper structure 3). The covers 8 are installed to be positioned inside the locus S without going outside it no matter whether the covers are in the open, closed, or half-open position, in which they are in the process of opening or closing. Thus the arrangement is made so that no matter which of the above positions the covers 8 are in, they are positioned inside the locus S which is traced by the outermost shell of the upper structure 3 as it swings.

In the figure, a numeral 9 indicates a gas cylinder urging a cover 8 to go toward the open position.

In the arrangement described above, the covers 8 are positioned inside the locus S, which is traced by the outermost shell of the upper structure 3 as it swings, without going outside the locus no matter whether the covers are in the open, closed, or half-open position, in which the covers are in the process of opening or closing. This, in turn, means that the covers 8 do not go outside the locus S, which is traced by the outermost shell of the upper structure 3 as it swings, when the swinging position of the upper structure 3 is desired to be shifted, with the covers in the open position, to perform inspection or maintenance, such as servicing, or even if the upper structure 3 swings, with the covers 8 carelessly left in the open position, after maintenance. Thus unlike a conventional upper structure whose covers 8 in the open position protrude beyond the locus S, a projecting cover can be prevented from hitting against an obstruction, so that the cover or obstruction is damaged.

Moreover, in the embodiment, an opening 5 extends from the top on one side to that one side of the upper structure 3 and a cover 8, which is in a substantially inverted L shape to open or close the top and one sides of the opening 5, is a gull-wing type and pivoted at the proximal base end edge of the top thereof in the middle of the top of the upper structure 3 so that the cover freely swings up and down to open or close. Thus the embodiment has an advantage of maintenance being easy to perform because the covers 8, which, when opened, are positioned inside the locus S, traced by the upper structure 3 as it swings, without going outside the locus, as described above, allow the openings 5 to open widely.

The present invention is not of course limited to the first embodiment above hut can apply to double-leafed hinged type (French-window type) covers 11X and 11Y of a second embodiment shown in Fig. 4 which open or close openings 10 provided in the sides of the upper structure 3. Making narrower in the right-left direction the covers 11X (for the embodiment, the rear covers), which are pivoted to a part far from the center of swinging A of the upper structure 3, than the covers 11Y (for the embodiment, the front covers), which are pivoted to a part near the center of swinging A, enables the arrangement to be made so that the covers 11X and 11Y are positioned inside the locus S, which is traced by the upper structure 3 as it swings, without going outside the locus when the covers are in the open position. The second embodiment has an advantage of enabling the openings 10 to open widely because the covers 11X and 11Y, which can be prevented from hitting against an obstruction when the upper structure 3 swings, are of the double-leafed hinged type. The same reference numerals are attached to the common parts (same parts) in the first and second embodiments.

### Industrial Applicability

Taken together, the present invention is industrially applicable in terms of the fact that making an arrangement as in claim 1 can prevent a cover in the open position from hitting against an obstruction, so that the cover or obstruction is not damaged when the upper structure swings.

The present invention is industrially applicable in terms of the fact that when the invention described in claim 1 is arranged as in claim 2, a cover is gull-wing and a cover in the open position, which is positioned inside the locus S, traced by the upper rotor as it rotates, without going outside the locus, allows an opening to open so widely that maintenance is easy to perform.

The present invention is further industrially applicable in terms of the fact that when the invention described in claim 1 is arranged as in claim 3, an advantage is offered of enabling an opening to open widely because covers, which can be prevented from hitting against an obstruction when the upper structure swings, are of the double-leafed hinged type.

## Claims

1. A work machine comprising an upper structure rotatably borne over a base, wherein covers swingable to open or close are provided in the upper structure, said covers are set not to go outside the locus which is traced by said upper structure as it swings when the covers are in the open position.

2. A work machine according to claim 1, wherein said covers are in a substantially inverted L shape to open or close an opening formed on throughout the top and one sides of the upper structure and is pivoted at the distal base end edge of the top of the covers with respect to the upper structure so that the cover freely swings up and down about the pivot edge.

3. A work machine according to claim 1, wherein when covers are arranged as the double-leafed hinged type to open or close openings formed in the sides of the upper structure the width of the covers which are disposed farther from the center of swinging of the upper structure is set to be narrower than that of the other covers which are disposed nearer the center of swinging.
